Europäisches Patentamt

(19) European Patent Office

Office européen des brevets

(11) Publication number: **0 151 559**
**B1**

## (12) EUROPEAN PATENT SPECIFICATION

(45) Date of publication of patent specification: **08.06.88**

(51) Int. Cl.⁴: **H 02 H 9/04,** H 05 K 3/32

(21) Application number: **85850030.9**

(22) Date of filing: **29.01.85**

(54) Transient protection unit.

(30) Priority: **03.02.84 SE 8400555**

(43) Date of publication of application:
**14.08.85 Bulletin 85/33**

(45) Publication of the grant of the patent:
**08.06.88 Bulletin 88/23**

(84) Designated Contracting States:
**BE CH DE FR GB IT LI NL**

(56) References cited:
**EP-A-0 092 052**
**CH-A- 553 530**
**DE-A-2 912 415**
**DE-B-2 428 266**
**GB-A-1 412 158**
**GB-A-2 025 146**
**GB-A-2 102 218**

(73) Proprietor: **TELEFONAKTIEBOLAGET L M ERICSSON**
**S-126 25 Stockholm (SE)**

(72) Inventor: **Kron, Karl Leif Emanuel**
**Blixtvägen 19**
**S-175 38 Järfälla (SE)**

(74) Representative: **Johnsson, Helge et al**
**Telefonaktiebolaget L M Ericsson**
**S-126 25 Stockholm (SE)**

Courier Press, Leamington Spa, England.

## Description

The present invention relates to a transient protection apparatus comprising at least one transient protection unit intended for connection to signal conductors for protecting equipment connected to the conductors, the unit including primary protection components in the form of gas discharge tubes arranged between the conductors and earth, and secondary protection components in the form of filter components and the like, connected to the conductors after the primary protection components. By "signal conductors" is generally intended here telephone and signal lines for different types of information transfer, but also conductors for operation, alarm and indication functions at small operational currents and voltages.

### Background Art

Transient protection units of this design are known and are above all intended to suppress dynamic variations in conductors generated by so-called NEMP and LEMP, i.e. electromagnetic pulses arising from nuclear missile explosions or lightning but also electromagnetic interference (EMI). In the case of pulses arising from nuclear missile explosions, there may be maximum values in the order of magnitude of 50 kilovolt with rising times in the order of magnitude of 5 ns. For effectively leading away as large a part as possible of such a pulse, the gas discharge tubes should have a very low inductance to earth.

The secondary protection part is intended and dimensioned for catering for the remainder of the original pulse, which does not manage to be led to earth, and which may have an amplitude in the maximum order of magnitude of 1200 volts. It is important for the secondary protection part that there is as good screening outwards as possible. In some cases this requirement has been found to collide with the requirement for low inductance to earth of the gas discharge tubes.

EP—AI—0092052 discloses a transient protection unit intended for connection to signal conductors for protecting equipment connected to the conductors, which includes primary and secondary protection components mounted on a printed circuit board, wherein the primary components take the form of asserters arranged between the conductors and earth and the secondary components, which include filter components are connected after the primary protection components.

### Disclosure of Invention

The object of the present invention is to achieve the construction of a transient protection apparatus of the kind defined in the introduction, which ensures a very low inductance to earth of the gas discharge tubes and a very effective screening of the secondary protection components.

This object has been achieved by the transient protection apparatus in accordance with the invention having been given the characterizing features disclosed in claim 1.

The invention and its advantages will now be described in detail with reference to an embodiment illustrated on the appended drawings.

### Brief Description of Drawings

On the drawings, Figure 1 illustrates a typical electrical wiring diagram for a conventional transient protection unit, Figures 2 and 3 being respectively a side view and a partially sectioned end view of a transient protection apparatus in accordance with the invention.

### Best Mode for Carrying Out the Invention

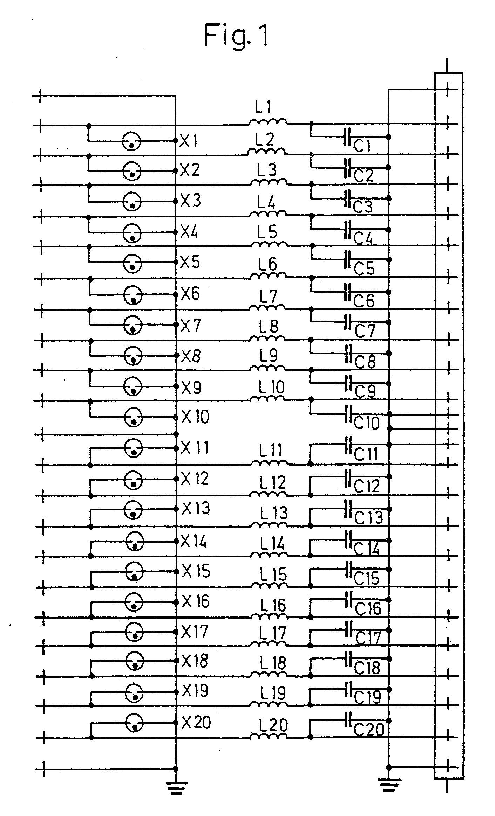

The exemplifying wiring diagram in Figure 1 of a transient protection unit intended for 20 conductors is entirely conventional. There is a spark gap tube X1—20 filled with noble gas for each conductor, the tube being connected between the conductor and earth. In the present embodiment the tubes can be assumed to be of the Ericsson NGC 40201 type. These tubes are button-shaped, with a diameter of about 8 mms and a thickness of about 6 mms. However, it will of course be understood that the invention can also be applied with tubes having other dimensions. The dimensions of the fitting devices described below for the tubes are adapted to suit the tubes. The gas discharge tubes form primary protection in the transient protection unit, and cater for the primary transient, which in certain cases can have an amplitude of 50 kilovolts and a rising time of 5 ns, as mentioned above. After the gas discharge tubes there are lowpass filters including inductors L1—20 and capacitors C1—20. These filters are intended and dimensioned for further suppressing residual parts of the transient.

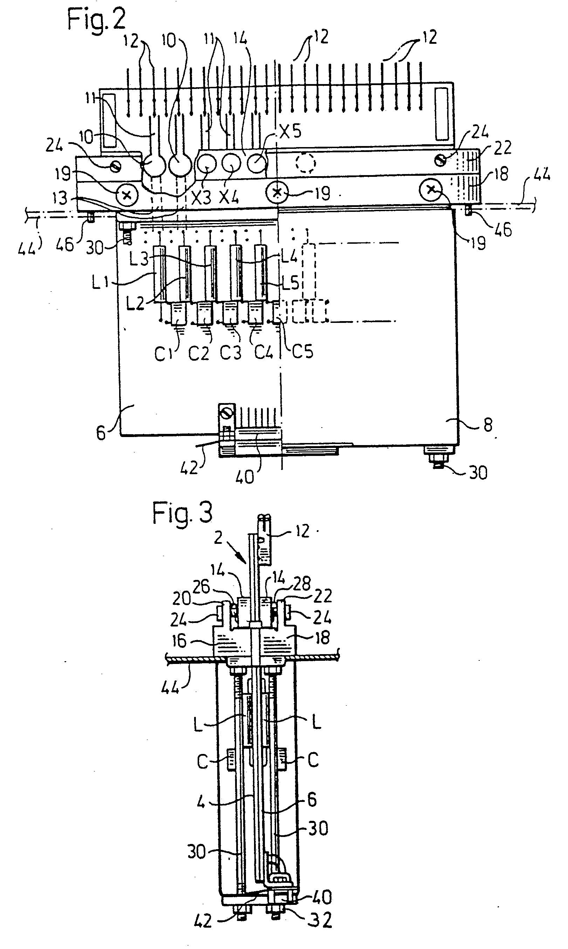

The transient protection unit is built up on a circuit board denoted by 2, which consists of two combined boards 4 and 6 in the illustrated embodiment. Half of the above-mentioned components are mounted on the outside of each of the boards 4 and 6. The righthand portion of Figure 2 illustrates the transient protection unit with a screening case 8 for the secondary protection part, this case 8 being more closely described below. The lefthand portion of Figure 2 illustrates the unit with the case 8 cut away. Half of the secondary protection components of the board 6, mounted on the outside of the board, will be recognized from the Figure. On the outside, the circuit patterns of the boards 4 and 6 each includes ten contact surfaces in a row for direct contact with the unearthed electrode of the corresponding one of the gas discharge tubes X1—20. In the lefthand half of Figure 2, further parts have been cut away to show two of these contact surfaces, which are denoted by 10. These contact surfaces 10 are connected via conductors 11 to input pins 12 of the unit.

On both sides of each board 4 and 6 the printed circuit is tightly surrounded by a residual metallic surface (not shown) which serves as a screen and earthing electrode (earth plane). On the sides of the boards 4 and 6 facing each other the printed circuit includes opposingly arranged components, indicated by dashed lines 13, which unite each of the contact surfaces 10 with a connection on a corresponding one of the inductors L1—20. These communication conductors 13, extending between the primary and secondary parts of the transient protection unit, are thus at least partially screened by their situation inside the parted circuit board 2.

On either side of the board 2 the ten gas discharge tubes are situated in corresponding through-cutouts in a plastics, bar-like holder 14, which is fitted for easy removal in a manner described in detail below. Extending over the entire width of either side of the board 2, and in intimate contact with the above-mentioned metallic surface, serving as screen and earthing electrode on the sides of the board, there are two metallic mounting bars 16 and 18 which are retained by three through-screws 19. The bars 16, 18 have strip-like projections 20, 22 extending parallel to the surfaces of the boards 4, 6. Screws 24, threaded into the projections 20 and 22 continuing down into holes in the ends of the holders 14, make the latter easily removable in situ. The projections 20, 22 also serve as stops for elongate contact springs 26, 28, which are bent into a U-shaped cross section. The legs of the springs 26, 28 facing towards the discharge tubes are divided into ten contact spring tongues adapted for contact with the respective earthing electrode of the tubes. In the lefthand half of Figure 2, only a portion of the projection 22 and spring 28 have been cut away to show a part of the holder 14 in plan with inserted gas discharge tubes X3—5. Earthing of the tubes thus takes place via the metal bars 16, 18, and as described below they are directly connected to an earthed protective case in an apparatus cabinet, in which the transient protection unit is intended to be used.

The case 8, taken over the secondary protection part of the protection unit, and shown in Figure 3 with a cut-away end wall, is kept in place, with its open end edge closely engaging against the underside of the metal bars 16, 18, with the aid of four threaded rods 30, which are screwed into the bars 16, 18 and extend down through the bottom of the casing 8, where they are provided with nuts 32. It is manifest that the casing 8 and bars 20, 22 together form an effective and tight encapsulation round the secondary protective part.

It is indicated at 40 how the outgoing conductors of the transient protection unit are collected together in a multipin contact means passing through the bottom of the casing 8. This contact means is effectively earthed to the casing 8 with the aid of an earthing tab indicated at 42.

In the transient protection unit described above, the mounting bars 16 and 18 can be used in a manner not more closely illustrated for attaching the unit to the edges of an adapted opening in an earthed metal wall of an apparatus cabinet, the secondary protection part being situated inside the cabinet. Such a wall is indicated at 44, with screws 46 for mounting in this way. The inputs to the transient protection unit are then connected to contact means which are accessible from the outside of the apparatus cabinet. When it is mounted in the wall of the apparatus cabinet, the protective unit can suitably be provided with extra, unillustrated protective casing.

The transient protection unit is made up in separated parts, as has been apparent from the above, which is important for residue transients not be taken further into the installation which is to be protected. The unit contains discharge tubes as primary protection and LC filters as secondary protection.

The tubes are placed in the outer "noisy" part and the filter in the inner part. The inner part is encapsulated by a sheet metal case which simultaneously serves as attachment means for the unit.

The apparatus in accordance with the invention can be used where large demands are made on the tightness against electrical leakage of equipment in an installation.

Connection providing electrical integrity for 20 conductors is thus obtained by the described mounting method.

The constructional principle of the invention brings with it several advantages:
— it enables mnodular construction of a connection, rack for portable, screened trucks, apparatus cabinets etc.
— High packing density.
— Easy connection, fitting and dismantling. As will be apparent from the above, this also applies to the gas discharge tubes in relation to the unit itself.

Particularly distinguishing for the apparatus in accordance with the invention is the mounting of the tubes, as described above, which results in that the tubes have very low inductance to earth, and as mentioned above this is a requirement in connection with EMP. All components are mounted on a circuit board, the metallic surface of which serves as screen and earth plane. Space can also be made on the board for extra secondary protection of the "transsorber" type, or zener diodes, for the case where extra large demands are made on transient suppression. It will be understood that the invention is, of course, not limited to the above-described arrangement with two separate circuit boards pressed together, but can just as well be applied to a case where all or similarly acting printed circuitry is placed in three layers in a single circuit board.

Neither is the invention, of course, otherwise limited to the described and illustrated embodiment, but can be modified within the scope of the following claims.

**Claims**

1. Transient protection apparatus comprising at least one transient protection unit intended for connection to signal conductors for protecting equipment connected to the conductors, said unit including primary protection components in the form of gas discharge tubes (X1—20) arranged between the conductors and earth and secondary protection components connected to the conductors after the primary protection components, in the form of filter components (L1—20, C1—20) or the like, characterized in that the components of the unit are mounted on a circuit board (2, 4, 6) extending through a conducting earthed wall (44) of the apparatus cabinet in such manner that the primary protection components are located outside of the cabinet, whereas the secondary protectiomn components are located inside of the cabinet, each gas discharge tube being clamped with its electrodes between a contact surface (10) of the board and a conducting bar (16, 18) connected with said earthed wall (44), the conductors (13) between the primary and the secondary protection components extending screened inside the board.

2. Apparatus as claimed in claim 1, characterized in that the secondary components (L 1—20, C 1—20) of the unit are encapsulated by a metal encapsulation (8) and that the conducting bar (16, 18) forms a portion of the metallic encapsulation.

**Patentansprüche**

1. Transientenschutzvorrichtung mit zumindest einer Transientenschutzeinheit, die für den Anschluß an Signalleitungen vorgesehen ist zum Schutze der an die Leitungen angeschlossenen Geräte, wobei die Einheit erste Schutzkomponenten in Form von Gasent ladungsröhren (X1—20), die zwischen den Leitern und Erde angeordnet sind, und zweite Schutzkomponenten umfaßt, die an die Leiter hinter den ersten Schutzkomponenten angeschlossen sind, in Form von Filterkomponenten (L1—20, C1—20) oder ähnlichem, dadurch gekennzeichnet, daß die Komponenten der Einheit auf einer Leiterplatte (2, 4, 6) angebracht sind, die sich durch eine leitende, geerdete Wand (44) des Vorrichtungsgehäuses erstreckt, so daß die ersten Schutzkomponenten außerhalb des Gehäuses angeordnet sind, wohingegen die zweiten Schutzkomponenten im Inneren des Gehäuses angeordnet sind, wobei jede Gasent ladungsröhre mit ihren Elektroden zwischen einer Kontaktoberfläche (10) der Leiterplatte und einer leitenden Schiene (16, 18) festgeklemmt ist, die mit der geerdeten Wand (44) verbunden ist, und wobei die Leitungen (13) zwischen den ersten und zweiten Schutzkomponenten sich in der Leiterplatte abgeschirmt erstrecken.

2. Vorrichtung nach Anspruch 1, dadurch gekennzeichnet, daß die zweiten Komponenten (L1—20, C1—20) der Einheit durch eine Metalleinkapsel (8) eingekapselt sind und daß die leitende Schiene (16, 18) einen Teil der metallischen Einkapselung bildet.

**Revendications**

1. Appareil de protection contre les transitoires comprenant au moins un dispositif de protection contre les transitoires prévu pour être connecté à des conducteurs de signal dans le but de protéger un équipement connecté aux conducteurs, ce dispositif comprenant des composants de protection primaires se présentant sous la forme de tubes à décharge dans un gaz (X1—20), branchés entre les conducteurs et la terre, et des composants de protection secondaires connectés aux conducteurs après les composants de protection primaires, sous la forme de composants de filtre (L1—20, C1—20) ou de composants similaires, caractérisé en ce que les composants du dispositif sont montés sur une carte de circuit (2, 4, 6) qui traverse une paroi (44), conductrice et reliée à la terre, de l'armoire de l'appareil, d'une manière telle que les composants de protection primaires se trouvent à l'extérieur de l'armoire, tandis que les composants de protection secondaires se trouvent à l'intérieur de l'armoire, chaque tube à décharge dans un gaz étant bloqué avec ses électrodes entre une surface de contact (10) de la carte et une barre conductrice (16, 18) connectée à la paroi latérale reliée à la terre (44), les conducteurs (13) entre les composants de protection primaires et secondaires s'étendant à l'intérieur de la carte, dans une situation dans laquelle ils sont blindés.

2. Appareil selon la revendicatiomn 1, caractérisé en ce que les composants secondaires (L1—20, C1—20) du dispositif sont encapsulés dans un élément d'encapsulation métallique (8), et les barres conductrices (16, 18) forment une partie de l'élément d'encapsulation métallique.

0 151 559

# Fig. 1

Fig. 2

Fig. 3